# EUROPÄISCHE PATENTANMELDUNG

(11) **EP 0 842 911 A1**
(43) Veröffentlichungstag der Anmeldung: **20.05.1998**
(21) Anmeldenummer: 97119583.9
(22) Anmeldetag: 08.11.1997
(51) Int. Cl.: C04B 33/14

(54) **Gefärbte tonige Agglomeratpartikel enthaltendes Granulat, Verfahren zu dessen Herstellung und dessen Verwendung**

(30) Priorität: 13.11.1996 DE 19646944
(71) Anmelder: CERDEC AKTIENGESELLSCHAFT KERAMISCHE FARBEN, D-60327 Frankfurt (DE)
(72) Erfinder: Manz, Joachim, 35435 Wettenberg 1 (DE); Molders, Armand, 35516 Ober-Hörgern (DE)

(57) **Zusammenfassung**

Die Herstellung von Steinzeugfliesen mit einem farbig gepunkteten Dekor läßt sich durch Verwendung eines erfindungsgemäßen Granulats vereinfachen.

Erfindungsgemäße tonige Granulate umfassen gefärbte tonige Agglomeratpartikel aus unter Verwendung einer wäßrigen Lösung mindestens eines Metallkomplexes eines färbenden Metallions mit einem organischen Komplexbildner und granuliertes Sprühgranulat in einer Matrix aus im wesentlichen ungefärbtem tonigen Sprühgranulat.

Die Herstellung der gefärbten Agglomeratpartikel enthaltenden tonigen Granulate erfolgt durch Granulieren eines Sprühgranulats mit einer wäßrigen Lösung eines Metallkomplexes. Eingesetzt werden bevorzugt Metallkomplexe der Elemente aus der Reihe Vanadium, Chrom, Mangan, Eisen, Kobalt und Ruthenium und organischer Chelatkomplexbildner, insbesondere Hydroxycarbonsäuren und Aminocarbonsäuren.

Das erfindungsgemäße Granulat dient zur Herstellung keramischer Artikel mit gepunktetem Dekor.

## Beschreibung

Die Erfindung betrifft tonige Granulate, umfassend gefärbte tonige Agglomeratpartikel in einer Matrix aus im wesentlichen ungefärbtem Sprühgranulat, ein Verfahren zu ihrer Herstellung und deren Verwendung zur Herstellung unglasierter Steinzeug-Fliesen mit farbig gepunktetem Dekor.

In der baukeramischen Industrie sind seit längerem farbige, tonige Sprühmassen, auch Sprühgranulate genannt, im Einsatz. Zur Herstellung derartiger Sprühmassen wird in einem ersten Schritt die betriebliche Masse zur Steinzeugherstellung mit einem Massefarbkörper, meistens einem Metalloxid oder -mischoxid, eingefärbt und die eingefärbte Masse dann in einem zweiten Schritt sprühgetrocknet. Zwecks Herstellung von unglasierten Steinzeugfliesen mit einem farbig gepunktetem Dekor (sogenannter Typ Gres Procellanato) werden farbig unterschiedliche Sprühgranulate gemischt, gemeinsam verpreßt und dann gebrannt. Der gesamte Aufwand zur Erzeugung derartig dekorierter Fliesen ist wegen der Notwendigkeit, zwei unterschiedliche Sprühgranulate getrennt herstellen zu müssen, aufwendig, erfordert viel Energie und mindert die Raum-Zeit-Ausbeute des Betriebs.

Zum Färben von keramischen Gegenständen finden seit einigen Jahren wäßrige Metallkomplex-Lösungen Verwendung, welche mindestens ein färbendes Metallkation in einem organischen Chelatkomplex enthalten - siehe E. Klein et al. in Sprechsaal International Ceramics and Glass Magazin, Heft 10 (1986). Diese Lösungen lassen sich auf getrocknete oder geschrühte Scherben aufbringen, etwa durch Sprühen, Tauchen, Streichen oder nach Verdicken der Lösung auch mittels Siebdruck. Die Metallkomplexe penetrieren in den Scherben und bilden beim Brand die endgültige Farbe. Es lassen sich durch Anordnung der Sprühdüsen und Führung der Brenntemperatur auch changierende oder geflammte Farben erzeugen.

Das genannte Dokument lehrt auch, die Metallkomplexlösung in die Masse einzuarbeiten, um eine gleichmäßige Verteilung der färbenden Metallionen und damit eine hohe Farbqualität zu erreichen. Die eingefärbte Masse kann dann zwecks Weiterverarbeitung in üblicher Weise in Sprühgranulate überführt werden. Nachteil derartiger massegefärbter Produkte ist neben dem hohen technischen Aufwand der hohe Einsatz an farbgebenden Komponenten, da die gesamte Masse durchgefärbt wird.

Gemäß EP-A 0 704 411 lassen sich geformte keramische Artikel, wie insbesondere Fliesen, unter Verwendung farbgebender Metallkomplexlosungen in einem Mehrstufenprozeß färben: a) Trocknen des geformten Artikels auf eine Restfeuchte von 0,5 Gew.-%, b) vorzugsweise Vorbehandlung mit Wasser, c) Behandlung des vorbehandelten Artikels mit einer Metallsalze oder Metallkomplexe enthaltenden wäßrigen Lösung, d) vorzugsweise Nachbehandlung mit Wasser, e) 8-stündige Lagerung zur Vergleichsmäßigung und anschließend keramischer Brand. Die Penetration der farbgebenden Metalle in die Oberfläche des Artikels ist nur dann für ein Glätten der Oberfläche nach dem Brand ausreichend tief, wenn die Vor- und Nachbehandlung erfolgen und/oder eine Rutheniumverbindung in der Metallkomplexlösung enthalten ist.

Die JP 07242460 A (Patent Abstracts of Japan) lehrt ein Verfahren zur Herstellung gepunkteter Fliesen. Hierbei wird Sprühgranulat auf einem Förderband mit einer Pigmentsuspension beaufschlagt, das Gemisch vor der Verfestigung in einen Siebkorb überführt. Erhalten wird eine punktförmig gefärbte Masse, woraus sich nach Formgebung und Brand gepunktete gefärbte Fliesen herstellen lassen. Die 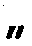 Punkte" weisen, wie festgestellt wurde, ringförmige Strukturen auf, da das Pigment nicht in das Korn des Sprühgranulats eindringt.

Aufgabe der Erfindung ist die Bereitstellung neuer gefärbter toniger Granulate zur Herstellung von Keramikpartikeln mit gepunktetem Dekor, bei deren Herstellung auf den Schritt der Einfärbung der tonigen Masse vor der Sprühtrocknung und die Verwendung von Pigmenten verzichtet werden kann. Eine weitere Aufgabe richtet sich auf eine vereinfachte Methode zur Herstellung von Steinzeugfliesen mit einem farbig gepunktetem Dekor vom Typ Gres Porcellanato.

Gefunden wurden tonige Granulate, umfassend gefärbte tonige Agglomeratpartikel aus unter Verwendung einer wäßrigen Lösung mindestens eines Metallkomplexes eines färbenden Metallions mit einem organischen Chelatkomplexbildner granuliertem tonigen Sprühgranulat in einer Matrix aus im wesentlichen ungefärbtem tonigen Sprühgranulat.

Unter den gefärbten tonigen Agglomeratpartikeln werden Partikel verstanden, welche durch Agglomerierung eines Sprühgranulats, das seinerseits hergestellt wurde durch Sprühtrocknen einer pumpfähigen tonigen Sprühmasse, unter Verwendung einer wäßrigen Metallsalzlösung als Granulierhilfsmittel erhältlich sind. (Zwecks Präzisierung wurde in der vorliegenden Anmeldung der Begriff 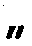 toniges Sprühgranulat" anstelle des in der Prioritätsanmeldung verwendeten Begriffs 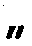 tonige Sprühmasse" verwendet; des weiteren wurde nun der Begriff 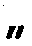 gefärbte Agglomeratpartikel" anstelle des Begriffs 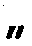 gefärbte Granulatparikel" verwendet). Die gefärbten tonigen Granulatpartikel befinden sich in einer Matrix aus tonigem Sprühgranulat, das selbst nicht oder nur in geringem Umfang granuliert und im wesentlichen auch nicht gefärbt ist. Die mittlere Korngröße der gefärbten tonigen Agglomeratpartikel ist aufgrund der Agglomerierung von Partikeln des Sprühgranulats größer als diejenige des tonigen Sprühgranulats. Das Mengenverhältnis zwischen gefärbten tonigen Agglomeratpartikeln und der Matrix aus dem tonigen Sprühgranulat richtet sich nach den Herstellbedingungen - durch Erhöhung des Gewichtsverhältnisses zwischen der im erfindungsgemäßen Verfahren eingesetzten Menge Metallkomplexlösung und dem Sprühgranulat läßt sich der Anteil an gefärbten tonigen Agglomeratpartikeln erhöhen.

Mittels üblicher Klassiertechniken ist es möglich, die gefärbten tonigen Agglomeratpartikel und die Matrix aus dem tonigen Sprühgranulat teilweise oder weitgehend voneinander zu trennen. Die gefärbten Agglomeratpartikel sind sehr hart, so daß sie gut handhabbar sind - bei üblichen Klassiertechniken ist ein nenneswerter Abrieb oder Bruch nicht zu befürchten. Die gefärbten Agglomeratpartikel lassen sich allein oder zusammen mit Sprühgranulat problemlos zu Formlingen, insbesondere Fliesen, pressen, wobei für diesen Zweck vorzugsweise das erfindungsgemäße Granulat verwendet wird.

Die gefärbten Agglomeratpartikel enthalten mindestens einen Chelatkomplex eines färbenden Metallions, insbesondere von Vanadium, Chrom, Mangan, Eisen, Kobalt, Nickel, Pd oder Ru. Die Auswahl des Metallions oder die Kombination mehrerer Metallionen ist entscheidend für die Farbe der Agglomeratpartikel sowie die Farbe, die sich hieraus während des Brands entwickelt. Die einzelnen Agglomeratpartikel können weitgehend durchgefärbt sein, da die wäßrige Metallkomplexlösung im Gegensatz zu einer Pigmentsuspension mit der farbgebenden Komponente in die Partikel des Sprühgranulats eindringen kann. Es ist aber auch möglich, daß einzelne Agglomeratpartikel nicht oder kaum gefärbte Partikel des Sprühgranulats einschließen. Während des Brandes werden organische Bestandteile der gefärbten Agglomeratpartikel verbrannt, und die färbenden Metallionen werden in Oxide überführt oder/und reagieren mit den Bestandteilen des Sprühgranulats; ferner kann es zu einem Wertigkeitswechsel der Metalle und damit einer Farbänderung kommen: Beispielsweise kann unter reduzierenden Brennbedingungen Fe₂O₃, das rotbraun ist, teilweise reduziert werden, und zwar unter Bildung des dunkelvioletten Fe₃O₄.

Die farbgebenden Metalle liegen in den gefärbten Agglomeratpartikeln in Form eines Chelatkomplexes eines organischen Chelatkomplexbildners vor. Wesentlich ist, daß der organische Chelatkomplexbildner während des Brands vollständig verbrennt. Vorzugsweise enthalten die gefärbten Agglomeratpartikel organische Komplexbildner mit mindestens zwei zur Chelatbildung befähigten Gruppen aus der Reihe von Hydroxyl-, Amino- und Carboxylgruppen, wie Hydroxycarbonsäuren, Aminocarbonsäuren, Polycarbonsäuren, Polyoxycarbonsäuren, Aminopolycarbonsäuren. Beispiele sind Ethylentetraessigsäure, Diethylentriaminpentaessigsäure, Nitrilotriessigsäure, Weinsäure, Citronensäure, Milchsäure, Apfelsäure, Polyacrylsäure, Polymaleinsäure.

Obgleich der mittlere Korndurchmesser der gefärbten Agglomeratpartikel in einem weiten Bereich liegen kann, wird die Herstellung der erfindungsgemäßen tonigen Granulate im allgemeinen so gesteuert, daß der mittlere Korndurchmesser der Agglomerate im Bereich zwischen 0,25 und 2,5 mm, insbesondere zwischen 0,5 und 1,5 mm, liegt. Ein mittlerer Korndurchmesser in diesem Bereich ist für die Anwendung zur Herstellung von Fliesen mit einem gepunkteten Dekor besonders geeignet.

Die Zusammensetzung des bei der Herstellung des erfindungsgemäßen tonigen Granulats eingesetzten tonigen Sprühgranulats entspricht jener wie sie von Steinzeugfliesen-Herstellern zum Einsatz gelangt. Derartige Zusammensetzungen enthalten meistens zwischen 10 und 80 Gew.-% Tone und/oder Kalk-Tone (Mergel); weitere Bestandteile sind Feldspäte, insbesondere Natriumfeldspat, Sande, Pegmatite, Schamotte und dergleichen. Das tonige Sprühgranulat wird in üblicher Weise hergestellt: Erzeugung eines Schlickers aus den verschiedenen tonigen Bestandteilen und Zusatzstoffen und Einsprühen des Schlickers in einen Sprühturm, aus welchem das Sprühgranulat mit einer Restfeuchte von einigen Prozent abgezogen wird. Der Korndurchmesser der einzelnen Partikel der Sprühmasse liegt üblicherweise unter 1 mm.

Erfindungsgemäße Granulate mit gefärbten tonigen Agglomeratpartikeln lassen sich dadurch herstellen, daß man in einer Granuliervorrichtung ein toniges Sprühgranulat unter Verwendung einer wäßrigen Lösung mindestens eines Metallkomplexes aus mindestens einem färbenden Metallion und einem organischen Chelatkomplexbildner granuliert. Bei der Granulierung wird das tonige Sprühgranulat mit der wäßrigen Lösung des Metallkomplexes in innigen Kontakt gebracht, wobei die Lösung in die Partikel eindringt und gleichzeitig die Agglomerierung bewirkt. Das Prinzip der Granulierung ist dem Fachmann bekannt. Zur Granulierung können übliche Granuliervorrichtungen verwendet werden, wie beispielsweise Schaufelmischer, Schneckenmischer und Granulierteller.

Das Mengenverhältnis zwischen dem tonigen Sprühgranulat und der wäßrigen Metallkomplexlösung kann in weiten Bereichen liegen. Im allgemeinen wird das tonige Sprühgranulat mit 1 bis 15 Gew.-%, insbesondere 5 bis 10 Gew.-%, der wäßrigen Metallkomplexlösung granuliert. Der Granuliereffekt beginnt bereits mit der Zugabe der flüssigen Metallkomplexlösung zum in einer Granuliervorrichtung bewegten Sprühgranulat. Die Korngrößen der entstehenden gefärbten Agglomerate hängt von der Einsatzmenge an Metallkomplex-Lösung, der Art der Dosierung, der Granulierzeit sowie von der Umdrehungszahl von in der Granuliervorrichtung gegebenenfalls angeordneten Messern oder Schnecken.

Die Metallgehalte (in Gew.-%) der Metallkomplexlösungen liegen im allgemeinen zwischen etwa 0,5 % und etwa 15 %, meist zwischen 1 und 10 %. Die pH-Werte liegen im allgemeinen zwischen etwa 5 und 10. Die Lösungen können gemischt und verdünnt werden.

Unter Verwendung handelsüblicher wäßriger Metallkomplex-Lösungen (z. B. Merapon®-Typen der Firma BK Ladenburg) lassen sich nach dem Brand folgende Farben erzielen:
Vanadiumsalz mit 11 bis 12 % V (Merapon® 2030) : gelb;
Eisen-Mangan-aminopolycarboxylat-hydroxycarboxylat mit ca. 4 % Fe (Merapon® 2006) : grau-braun;
Kobalt-hydroxycarboxylat mit 7 bis 8 % Co (Merapon® 2005) : blau
Chrom-Eisen-hydroxycarboxylat mit 4 bis 5 % Fe und ca. 4 bis 6 % Cr (Merapon® 2009) : schokoladenbraun;
Kobalt-hydroxycarboxylat-Vanadiumsalz mit ca. 0,3 bis 0,7 % Co und 5 bis 7 % V (Merapon® 2011) : grau;
Eisen-hydroxycarboxylat mit ca. 9 bis 10 % Fe (Merapon® 2020) : rotbraun;
Eisen-Kobalt-hydroxycarboxylat mit ca. 2 bis 4 % Co und 4 bis 6 % Fe (Merapon® 2004) : schwarz;
Mangan-polycarboxylat (Merapon® 1188) mit 4 bis 6 % Mn
Kobalt-hydroxycarboxylat-Chrom-polycarboxylat mit 2,5 bis 3,5 % Cr und 1,5 bis 2 % Co (Merapon® 2014);
Kobalt-Eisen-hydroxycarboxylat mit 4 bis 5 % Co und 3 bis 4 % Fe (Merapon® 2015) : schwarz-grün
Chromsalz mit ca. 6 bis 8 % Cr (Merapon® 2051) : erdbraun.

Das bei der Granulierung erhaltene Granulat kann entweder unmittelbar zur Herstellung von Steinzeugfliesen verwendet werden. Es ist auch möglich, einem Teil oder nahezu die gesamte Matrix aus nicht oder kaum granuliertem im wesentlichen ungefärbten Sprühgranulat mittels eines üblichen Klassierverfahrens von den gefärbten Agglomeratpartikel abzutrennen, und die gefärbten Agglomeratpartikel separat zu verwenden.

Die erfindungsgemäßen tonigen Granulate eignen sich zur Herstellung von unglasierten Steinzeugfliesen mit farbig gepunktetem Dekor. In dieser Anwendung wird vorzugsweise unmittelbar das Granulat, wie es bei der erfindungsgemäßen Herstellung durch Granulierung eines Sprühgranulats mit einer wäßrigen Metallkomplexlösung erhalten wird, verwendet werden. Die im so erhaltenen Granulat befindlichen gefärbten tonigen Agglomeratpartikel führen zu dem gepunkteten Dekor. Es ist aber auch möglich, von der Matrix aus Sprühgranulat teilweise oder weitgehend befreite gefärbte tonige Agglomeratpartikel gemeinsam mit einem gegebenenfalls anders zusammengesetzten Sprühgranulat zur Fliesenherstellung zu verwenden. Die Fliesenherstellung selbst erfolgt in üblicher Weise und umfaß die Formgebung durch Verpressen und den sich anschließenden Brand, wobei die Brenntemperatur und die Brennbedingungen auf die Zusammensetzung des Sprühgranulats beziehungsweise des erfindungsgemäßen Granulats abgestimmt werden. Häufig liegt die Brenntemperatur um 1000 °C. Die gebrannten Fliesen lassen sich in bekannter Weise nachpolieren.

Vorteile der erfindungsgemäßen Granulate sind die leichte Herstellbarkeit derselben und deren einfache Anwendung zur Herstellung von Fliesen mit einem farbig gepunkteten Dekor. Während bei der Verwendung eines vorbekannten, durch Granulierung von Sprühgranulat mit einer wäßrigen Pigmentsuspension hergestellten Granulats zur Fliesenherstellung das Dekor ringförmig farbige Strukturen aufweist, ist das Dekor unter Verwendung erfindungsgemäßer toniger Granulate gepunktet, wobei die Punkte im allgemeinen durchgefärbt sind. Durch Verwendung der erfindungsgemäßen Granulate konnte der Gesamtaufwand wesentlich reduziert werden, da die Herstellung einer in der Masse durchgefärbten Sprühmasse entfällt, was im Betrieb zu erheblichen Energieeinsparungen führt und zusätzlich Zeit erspart und eine zusätzliche betriebliche Lagerung überflüssig macht. Auch ist die Fliesenherstellung selbst einfacher, weil es nicht mehr notwendig ist, zwei verschiedene Sprühmassen in geeigneter Weise der Vorrichtung zur Herstellung der Scherben zuzuführen.

### Beispiel

45,6 kg eines Sprühgranulats (SG-FG der Fa. Fuchs'sche Tonwerke) werden in einen mit Schaufeln ausgerüsteten Mischer (Ruberg-Mischer) eingefüllt und 10 sec. vorgemischt. Hierdurch wird eine homogene Masseverteilung im Mischer erreicht. Im Anschluß an die Vormischung wird das Sprühgranulat mit 3,6 kg einer Metallkomplexlösung (Merapon® 2005) über einen Einfüllstutzen langsam betröpfelt. Der Granuliereffekt beginnt unmittelbar mit der Zugabe der Metallkomplexlösung zur im Mischer laufenden Masse. Im durchgeführten Versuch wurden sowohl das Mischwerk als auch die an der Seitenwand liegenden Rotoren mit maximaler Geschwindikgeit betrieben. Die Gesamtmischzeit einschließlich der Metallkomplexlösung betrug 25 sec. Erhalten wurde ein Granulat aus violettgefärbten Agglomeratpartikeln in einer Matrix aus noch nicht granuliertem, nicht-gefärbtem Sprühgranulat. Nach Absieben des hergestellten Granulats über ein 1,25 mm-Sieb wurde der Siebdurchgang der Fliesenherstellung zugeführt. Erhalten wurden nach dem Brand unglasierte Steinzeugfliesen mit einem blau-gepunkteten Dekor.

## Patentansprüche

1. Toniges Granulat, umfassend gefärbte tonige Agglomeratpartikel aus unter Verwendung einer wäßrigen Lösung mindestens eines Metallkomplexes eines färbenden Metallions mit einem organischen Chelatkomplexbildner granuliertem tonigen Sprühgranulat in einer Matrix aus im wesentlichen ungefärbtem tonigen Sprühgranulat.

2. Toniges Granulat nach Anspruch 1,
dadurch gekennzeichnet,
daß die gefärbten Agglomeratpartikel mindestens einen Chelatkomplex von Vanadium, Chrom, Mangan, Eisen, Kobalt, Palladium oder Ruthenium enthalten.

3. Toniges Granulat nach Anspruch 1 oder 2,
dadurch gekennzeichnet,
daß die gefärbten Agglomeratpartikel als Chelatkomplexbildner eine Hydroxycarbonsäure oder Aminocarbonsäure, insbesondere aus der Reihe Weinsäure, Citronensäure und Ethylendiamintetraessigsäure, enthalten.

4. Toniges Granulat nach einem der Ansprüche 1 bis 3,
dadurch gekennzeichnet,
daß die gefärbten Agglomeratpartikel einen mittleren Korndurchmessser im Bereich von 0,5 bis 1,5 mm aufweisen.

5. Verfahren zur Herstellung eines tonigen Granulats mit gefärbten tonigen Agglomeratpartikeln gemäß einem der Ansprüche 1 bis 5,
dadurch gekennzeichnet,
daß man in einer Granuliervorrichtung ein toniges Sprühgranulat unter Verwendung einer wäßrigen Lösung mindestens eines Metallkomplexes eines färbenden Metallions mit einem organischen Chelatkomplexbildner granuliert.

6. Verfahren nach Anspruch 5,
dadurch gekennzeichnet,
daß man als Granuliervorrichtung einen Schaufel- oder Schneckenmischer oder einen Granulierteller verwendet.

7. Verfahren nach Anspruch 5 oder 6,
dadurch gekennzeichnet,
daß man das tonige Sprühgranulat mit 1 bis 15 Gew.-%, insbesondere 5 bis 10 Gew.-%, bezogen auf die Sprühmasse der wäßrigen Metallkomplexlösung, deren Metallgehalt zwischen 0,5 und 15 Gew.-%, insbesondere zwischen 2 bis 10 Gew.-% liegt, granuliert.

8. Verwendung eines tonigen Granulats gemäß einem der Ansprüche 1 bis 4 oder erhältlich nach einem Verfahren der Ansprüche 5 bis 7 zur Herstellung von unglasierten Steinzeugfliesen mit farbig gepunktetem Dekor, umfassend Verpressen des tonigen Granulats und Brennen des Scherbens unter üblichen Brennbedingungen für Steinzeugfliesen.
